# EUROPÄISCHE PATENTANMELDUNG

(11) **EP 2 527 762 A1**
(43) Veröffentlichungstag der Anmeldung: **28.11.2012**
(21) Anmeldenummer: 11167580.7
(22) Anmeldetag: 26.05.2011
(51) Int. Cl.: F24J 2/52

(54) **Befestigungsvorrichtung**

(71) Anmelder: Milboro Aktiengesellschaft, 9491 Ruggell (LI)
(72) Erfinder: Lechthaler, Andreas, 6710 Nenzing (AT)
(74) Vertreter: Patentbüro Paul Rosenich AG

(57) **Zusammenfassung**

Die Erfindung betrifft eine Befestigungsvorrichtung (11) für die Halterung eines Sonnenkollektors an einer Dachunterkonstruktion, mit einem Fussteil (12), mit einem Hakenteil (32) und mit einem Verbindungsmittel (61) zum Verbinden des Hakenteils (32) mit dem Fussteil (12). An der Kontaktfläche (16) des Fussteils (12) sowie an der Kontaktfläche (37) des Hakenteils (32) ist eine Querverzahnung (17, 38) mit jeweils mehreren, parallel zueinander verlaufenden Zähnen (18, 39) vorgesehen. Die Zähne (18, 39) der Querverzahnungen (17, 38) sind im Querschnitt jeweils asymmetrisch ausgebildet.

## Beschreibung

Die Erfindung bezieht sich auf eine Befestigungsvorrichtung für die Halterung einer Baueinheit, insbesondere eines Sonnenkollektors, an einer Unterkonstruktion, insbesondere an einer Dachunterkonstruktion, nach dem Oberbegriff des Anspruchs 1.

Derartige Befestigungsvorrichtungen werden auch als Dachhaken bezeichnet und sind in einer Vielzahl verschiedener Ausführungsformen aus dem Stand der Technik bekannt. Die Befestigungsvorrichtungen dienen beispielsweise der Befestigung von Baueinheiten, wie beispielsweise Solaranlagenmodulen (Sonnenkollektoren), wobei die Befestigungsvorrichtung über einen Befestigungsabschnitt mittelbar oder unmittelbar, d. h. direkt, an einem Dachelement, beispielsweise an einem Dachsparren oder einer Dachlatte befestigt werden kann. Ferner weist die Befestigungsvorrichtung zumeist einen beispielsweise über die Dachziegel ragenden Halteabschnitt auf, wobei am Halteabschnitt mittel- oder unmittelbar, d. h. direkt, die Baueinheit befestigt werden kann.

Neben einteiligen Dachhaken als Befestigungsvorrichtungen sind auch mehrteilige Lösungen bekannt. Die DE 102 139 02 A1 offenbart eine gattungsgemässe Befestigungsvorrichtung für die Halterung eines Kollektors an einer Dachunterkonstruktion. Die Befestigungsvorrichtung umfasst ein Fussteil, das einen Befestigungsabschnitt zur Anordnung der Befestigungsvorrichtung an der Dachunterkonstruktion aufweist, ein Hakenteil, das einen Halterungsabschnitt für die Halterung des Kollektors an der Befestigungsvorrichtung aufweist, und ein Verbindungsmittel zum Verbinden des Hakenteils mit dem Fussteil. An der Kontaktfläche des Fussteils sowie an der Kontaktfläche des Hakenteils, welche im zusammengesetzten Zustand der Befestigungsvorrichtung miteinander in Anlage kommen, ist bereichsweise eine Querverzahnung mit jeweils mehreren, parallel zueinander verlaufenden Zähnen vorgesehen.

Die aus dem Stand der Technik bekannten Befestigungsvorrichtungen bzw. Dachhaken genügen jedoch hinsichtlich ihrer konstruktiven Ausgestaltung bzw. hinsichtlich ihrer grundsätzlichen Verstell- oder Toleranzausgleichsmöglichkeiten nicht den bei der Montage oftmals auftretenden Erfordernissen.

Auf solche Konstruktionen wirken zudem hohe Kräfte, z. B. Windsogkräfte, ein, so dass bei den bekannten Lösungen die Verbindungsmittel, welche das Fussteil und das Hakenteil verbinden, hohen Belastungen ausgesetzt sind. Diese müssen entsprechend massiv ausgebildet werden, was sich auf die Kosten, die Montagefreundlichkeit und den erforderlichen Platzbedarf nachteilig auswirkt. Zudem ist die Gebrauchstauglichkeit der Befestigungsvorrichtung massgeblich von der Qualität der Montage abhängig.

Aufgabe der vorliegenden Erfindung ist es somit, eine Befestigungsvorrichtung zu schaffen, welche die vorgenannten Nachteile nicht aufweist und insbesondere hoch belastbar ist, einfach in der Handhabung ist sowie eine Vielzahl von Einstellmöglichkeiten bietet.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung sind die Zähne zumindest einer der Querverzahnungen im Querschnitt jeweils asymmetrisch ausgebildet.

Unter einer asymmetrischen Ausbildung wird in diesem Zusammenhang eine Ausgestaltung des einzelnen Zahns verstanden, bei welcher in Bezug auf eine normal zur Kontaktfläche stehende und durch den Schnittpunkt oder einen gedachten Schnittpunkt der Zahnflanken verlaufende Bezugsgerade die Querschnitte der Zähne asymmetrisch ausgebildet sind. Die Zähne können z.B. auch überhängend ausgebildet sein, sodass sie einen Teil der Kontaktfläche oder einen benachbarten Zahn teilweise überdecken..

Es ist nicht zwingend erforderlich, dass die Zahnflanken der Zähne in einer gemeinsamen Kante schneiden. Der Übergang zwischen den Zahnflanken könnte auch abgerundet oder leicht abgeschrägt sein.

Aufgrund der jeweils asymmetrischen Ausgestaltung greifen bei Belastung der Befestigungseinrichtung und insbesondere des Hakenteils die Zähne der Querverzahnungen derart ineinander, dass der grösste Teil der von der Befestigungsvorrichtung aufzunehmenden, resultierenden Kräfte über die Querverzahnungen und nicht mehr von dem Verbindungsmittel übernommen werden. Dadurch bestehen wesentlich geringere Anforderungen an das Verbindungsmittel als dies bei den bisher bekannten Lösungen der Fall ist. Das Verbindungsmittel zum Verbinden des Fussteils und des Hakenteils hat im Wesentlichen nur noch eine verbindende Wirkung und muss keine oder nur noch geringe Lasten aufgrund der auf die Befestigungsvorrichtung einwirkenden Belastungen aufnehmen. Die Zähne der Querverzahnung des Hakenteils und die Zähne der Querverzahnung des Fussteils verhaken sich vorteilhaft derart ineinander, dass das Hakenteil während der Montage im Wesentlichen selbstfixierend in das Fussteil "eingehängt" werden kann. Die Traglast verteilt sich dabei im Wesentlichen gleichmässig auf alle miteinander in Eingriff stehenden Zähne der Querverzahnungen. Vorteilhaft ergibt sich ein Formschluss zwischen den miteinander im Eingriff stehenden Querverzahnungen. Mit Hilfe der Querverzahnung können zudem Toleranzen auch in Querrichtung ausgeglichen werden.

Die Zähne der Querverzahnung sind jeweils im Wesentlichen quer zu einer Längserstreckung ausgerichtet, welche ausgehend von dem freien Ende des Halterungsabschnitts des Hakenteils verläuft.

Vorzugsweise sind die Querverzahnungen der Kontaktflächen komplementär zueinander ausgebildet, womit in vorteilhafter Weise der Formschluss zwischen dem Fussteil und dem Hakenteil unter Belastung des Hakenteils sichergestellt ist.

Bevorzugt weist das Fussteil einen von dem Befestigungsabschnitt abragenden Verbindungsabschnitt und das Hakenteil einen Anlageabschnitt auf, wobei die Kontaktfläche des Fussteils an dem Verbindungsabschnitt und die Kontaktfläche des Hakenteils an dem Anlageabschnitt vorgesehen sind. Mit dem abragenden Verbindungsabschnitt und dem Anlageabschnitt ist eine einfache Zugänglichkeit der zu erstellenden Verbindung sichergestellt, was die Montagefreundlichkeit der Befestigungsvorrichtung wesentlich verbessert.

Vorzugsweise sind die Zähne der Querverzahnung gegenüber einer Bezugsgeraden, welche senkrecht zu einer von dem Verbindungsabschnitt oder dem oder dem Anlageabschnitt aufgespannten Ebene ausgerichtet ist, in einem Neigungswinkel geneigt. Dies gewährleistet in vorteilhafter Weise, dass das an dem Fussteil an- oder aufliegende Hakenteil unter betriebsmässiger Last und Stellung allein formschlüssig an diesem haltbar ist.

Bevorzugt weist der Verbindungsabschnitt ein freies Ende auf und die dem freien Ende des Verbindungsabschnitts zugewandte erste Zahnflanke eines Zahns der Querverzahnung der Kontaktfläche des Fussteils weist eine kürzere Erstreckung als die dem freien Ende des Verbindungsabschnitts abgewandte zweite Zahnflanke desselben Zahns auf. Derartig ausgebildete Zähne haben eine sägezahnähnliche Ausgestaltung, welche für eine formschlüssige Kraftübertragung zwischen dem Fussteil und dem Hakenteil besonders vorteilhaft ist.

Vorzugsweise weist der Anlageabschnitt ein freies Ende auf und die dem freien Ende des Anlageabschnitts zugewandte erste Zahnflanke eines Zahns der Querverzahnung der Kontaktfläche des Hakenteils weist eine kürzere Erstreckung als die dem freien Ende des Anlageabschnitts abgewandte zweite Zahnflanke desselben Zahns auf. Derartig ausgebildete Zähne haben eine sägezahnähnliche Ausgestaltung, welche für eine formschlüssige Kraftübertragung zwischen dem Fussteil und dem Hakenteil besonders vorteilhaft ist. Insbesondere wenn die Zähne der Querverzahnung an der Kontaktfläche des Verbindungsabschnitts wie im vorherigen Absatz dargelegt ausgebildet sind, ergibt sich ein besonders vorteilhafter Formschluss zwischen den Querverzahnungen der Kontaktflächen unter Belastung der Befestigungsvorrichtung. Somit erfolgt eine Kraftübertragung im Wesentlichen nur über die Querverzahnungen und das den Fussteil und das Hakenteil verbindende Verbindungsmittel wird kaum noch belastet.

Bevorzugt schliessen die erste Zahnflanke eines Zahns und/oder die zweite Zahnflanke desselben Zahns mit der Bezugsgeraden jeweils einen spitzen Neigungswinkel ein, womit eine vorteilhafte sägezahnähnliche Ausbildung der Querverzahnung und somit ein besonders guter Formschluss zwischen dem Fussteil und dem Hakenteil unter Belastung der Befestigungsvorrichtung geschaffen wird.

Vorzugsweise beträgt der Neigungswinkel der ersten Zahnflanke etwa 0.1 °bis 25°, da sich dieser Winkelbereich für eine ideale Kraftübertragung zwischen dem Fussteil und dem Hakenteil als besonders vorteilhaft erwiesen hat. Als besonders vorteilhaft hat sich ein Neigungswinkel von 10 °bis 15 °erwiesen.

Bevorzugt beträgt der Neigungswinkel der zweiten Zahnflanke etwa 40° bis 65°, da sich dieser Winkelbereich für eine ideale Kraftübertragung zwischen dem Fussteil und dem Hakenteil als besonders vorteilhaft erwiesen hat. Als besonders vorteilhaft hat sich ein Neigungswinkel von 50° bis 60° erwiesen.

Vorzugsweise ist an einer der Kontaktfläche gegenüberliegenden Seite des Anlageabschnitts eine weitere Querverzahnung vorgesehen, an welcher beispielsweise ein entsprechend ausgebildetes Element eingreifen kann. Beispielsweise umfasst das Verbindungsmittel eine mit einer Profilierung versehene Unterlegscheibe, deren Profilierung beim Verspannen des Verbindungsmittels in die Querverzahnung an der der Kontaktfläche gegenüberliegenden Seite des Anlageabschnitts eingreift und so die geschaffene Verbindung zusätzlich sichert. Vorteilhaft ist diese zusätzliche Querverzahnung analog der Querverzahnung an der Kontaktfläche des Verbindungsabschnitts ausgebildet. Alternativ dazu kann die Ausrichtung der Zähne der weiteren Querverzahnung von der Ausrichtung der Zähne der Querverzahnung an der Kontaktfläche des Verbindungsabschnitts variieren.

Bevorzugt umfasst das Verbindungsmittel ein mit dem Anlageabschnitt des Hakenteils in Anlage bringbares Fixierelement, das vorteilhaft an einer mit dem Hakenteil in Anlage bringbaren Anlageseite zumindest bereichsweise mit einer Querverzahnung versehen ist. Beispielsweise umfasst das Verbindungsmittel eine mit einer Profilierung versehene Unterlegscheibe. Vorteilhaft ist diese zusätzliche Querverzahnung analog der Querverzahnung an der Kontaktfläche des Anlageabschnitts ausgebildet. Im verspannten Zustand des Verbindungsmittels ist der Anlageabschnitt des Hakenteils zwischen dem Fixierelement und dem Fussteil, vorteilhaft dem Verbindungsabschnitt des Fussteils, einklemmt. Eine solche Verbindung zeichnet sich durch eine hohe Sicherheit unter verschiedenen Belastungen der Befestigungsvorrichtung aus. Ein solches Fixierelement ist insbesondere bei einer mehrteiligen Befestigungsvorrichtung vorteilhaft, bei welcher der Anlageabschnitt des Hakenteils an einander gegenüberliegenden Seiten mit Querverzahnungen versehen ist.

Vorzugsweise ist die Querverzahnung an dem Fixierelement komplementär zu der Querverzahnung an der der Kontaktfläche gegenüberliegenden Seite des Anlageabschnitts des Hakenteils vorgesehenen Querverzahnung ausgebildet, so dass ein vorteilhafter Formschluss auch zwischen diesen Teilen gegeben ist. Zudem ist bei einer derartigen Ausgestaltung die Montage der Befestigungseinrichtung zusätzlich vereinfacht, da das Hakenteil bereits bei der Anordnung an dem Fussteil vorfixiert wird.

Bevorzugt ist eine Hintergreifnut, vorteilhaft an dem Fussteil, vorgesehen und das Verbindungsmittel umfasst ein mit der Hintergreifnut verspannbares Hintergreifteil, auch Kulissenstein genannt. Derartige Verbindungsmittel haben sich in der Praxis bewährt, da sie eine einfache Montage auch unter erschwerten Montagebedingungen, wie auf Dachflächen ermöglichen.

In diesem Zusammenhang wird unter einer Hintergreifnut eine form- und/oder funktionskomplementäre Öffnung für das Hintergreifteil verstanden. Das Hintergreifteil kann seinerseits Führungsabschnitte (z. B. Vertiefungen) aufweisen, in welche Führungsabschnitte (Stege) der Hintergreifnut eingreifen bzw. geführt werden.

Vorzugsweise schliesst der Verbindungsabschnitt mit dem Befestigungsabschnitt einen stumpfen Winkel ein, womit die Befestigungsvorrichtung schräge Justierflächen aufweist. Diese ermöglichen eine Ausrichtung des Hakenteils zum Fussteil in kleinen und flexiblen Schritten.

Bevorzugt ist im Verbindungsabschnitt des Fussteils und/oder im Anlageabschnitt des Hakenteils ein Verstelllängsschlitz zur Aufnahme des Verbindungsmittels oder einer Durchsteck-Schraubverbindung vorgesehen, womit die Justierung des Hakenteils zum Fussteil beziehungsweise der Baueinheit zur Befestigungsvorrichtung noch vielseitiger ist. Die Durchsteck-Schraubverbindung kann beispielsweise aus einer Sechskantmutter und einem innerhalb des Fussteils beweglich gelagerten Hintergreifteils bestehen. Mittels der Durchsteck-Schraubverbindung kann das Hakenteil ortsfest am Fussteil angelegt bzw. befestigt werden.

Vorzugsweise ist eine Gleiteinrichtung mit Führungsabschnitten an dem Halterungsabschnitt vorgesehen, wobei die Führungsabschnitte in eine Richtung quer zur Längserstreckung des Halterungsabschnitts ausgerichtet sind. Dies ermöglicht eine toleranzausgleichende Halterung der Baueinheit an der Befestigungsvorrichtung in die Richtung quer zur Längserstreckung des Halterungsabschnitts. Mit der Gleiteinrichtung für die Baueinheit ermöglicht die Befestigungsvorrichtung somit einen optimalen Ausgleich hinsichtlich eventuell auftretender Montagetoleranzen.

Eine solche Gleiteinrichtung kann auch in einer einteiligen Ausführung einer Befestigungsvorrichtung vorgesehen sein und ist somit nicht zwingend auf eine mehrteilige, vorteilhaft zweiteilige Befestigungsvorrichtung beschränkt.

Bevorzugt umfasst die Gleiteinrichtung an dem Halterungsabschnitt angeordnete, in Richtung quer zu dessen Längserstreckung führende und in dessen Längserstreckung bewegungshemmende Führungsabschnitte sowie ein an der Baueinheit anordenbares Halteelement, wobei das Halteelement von den Führungsabschnitten geführt ist. Das Halteelement für die Baueinheit ist dabei in Richtung der Längserstreckung des freien Dachhakenendbereichs unverschieblich, vorteilhaft nahezu spielfrei, angeordnet. Quer dazu ist das Halteelement jedoch verschieblich, um Spannungen bei der erstellten Montagekonstruktion z. B. infolge einer Längenausdehnung der Montagekonstruktion und/oder der Baueinheit in "Querrichtung" ausgleichen zu können.

Eine vorteilhafte Ausführungsform sieht vor, dass die Führungsabschnitte hakenförmig ausgebildet sind. Vorteilhaft ist einer der Führungsabschnitte durch einem am äusseren Ende des Halterungsabschnitts zurückgebogenen Endabschnitt gebildet, wobei der zumindest eine weitere Führungsabschnitt in Längserstreckung des Halterungsabschnitts beabstandet angeordnet ist, so dass eine zweiseitig begrenzte Aufnahme für das Halteelement geschaffen ist. Damit wird eine gute Zugänglichkeit zur Gleiteinrichtung auch im verbauten bzw. montierten Zustand ermöglicht.

Vorzugsweise umfasst das Halteelement für die Baueinheit einen ersten, von den Führungsabschnitten führbaren Schenkel und einen von dem ersten Schenkel abragenden, zweiten Schenkel mit einer Befestigungseinrichtung zur Befestigung der Baueinheit. Dieses Halteelement ist als Haltewinkel ausgebildet. An zumindest einer der äusseren Längsseiten des ersten Schenkels des Halteelementes kann ein entlang derselben verlaufender Hinterschnitt vorgesehen sein, welcher die Führung des Haltelementes vorteilhaft sicherstellt. Der Haltewinkel ist zwar beweglich, jedoch nahezu spielfrei, innerhalb der Führungsabschnitte angeordnet.

Bevorzugt ist ein Verstelllängsschlitz für die Befestigungseinrichtung an dem Halteelement vorgesehen, womit die Baueinheit justierbar an der Befestigungsvorrichtung befestigt werden kann. Bei einem winkelförmigen Halteelement ist der Verstelllängsschlitz vorteilhaft an dem zweiten Schenkel vorgesehen. Die Durchsteck-Schraubverbindung kann beispielsweise aus einer Sechskantschraube mit korrespondierender Mutter oder Hintergreifteil bestehen.

Vorzugsweise umfasst die Gleiteinrichtung weiter ein Gleitelement, welches den Toleranzausgleich auch über eine längere Gebrauchsdauer sowie unter für das Material der Befestigungsvorrichtung nachteiligen Bedingungen für einen längeren Zeitraum sicherstellt. Das Gleitelement ist beispielsweise aus Teflon oder einem Material mit geeigneten Gleiteigenschaften hergestellt. Dabei kann das Gleitelement ein separat angeordnetes Element oder ein an dem Halteelement und/oder an dem Halterungsabschnitt der Befestigungsvorrichtung fixiertes Element sein. Vorteilhaft ist das Gleitelement zwischen dem Halteelement und dem Halterungsabschnitt des Hakenteils angeordnet, womit diese Teile für den Toleranzausgleich sicher gegeneinander verschiebbar sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Befestigungsvorrichtung in Form eines Dachhakens mit Gleiteinrichtung in perspektivischer Darstellung,
- Fig. 2: die Befestigungsvorrichtung gem. Fig. 1 in einer Seitenansicht,
- Fig. 3: einen vergrösserten Ausschnitt der Gleiteinrichtung mit einem innerhalb der Gleiteinrichtung angeordneten Haltewinkel in perspektivischer Darstellung,
- Fig. 4: ein Detail des Fussteils gem. Detail A in Fig. 2;

- Fig. 5: ein Detail des Hakenteils gem. Detail A in Fig. 2;
- Fig. 6: ein weiteres Detail des Fussteils gem. Detail A in Fig. 2; und
- Fig. 7: eine zweite Ausführungsform einer erfindungsgemässen Befestigungsvorrichtung in perspektivischer Darstellung.

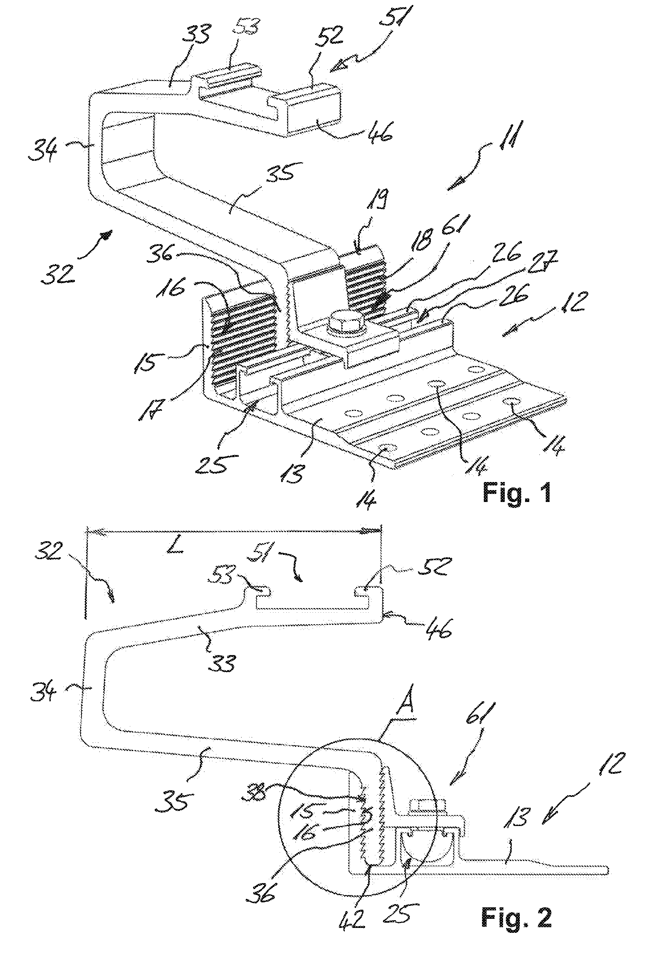

Die in den Figuren 1 und 2 gezeigte Befestigungsvorrichtung 11 ist ein so genannter Dachhaken für die Halterung einer hier nicht dargestellten Baueinheit, insbesondere eines Sonnenkollektors, an einer hier nicht dargestellten Unterkonstruktion, insbesondere an einer Dachunterkonstruktion. Die Befestigungsvorrichtung 11 umfasst ein Fussteil 12, ein Hakenteil 32 und ein Verbindungsmittel 61 zum Verbinden des Hakenteils 32 mit dem Fussteil 12.

Das Fussteil 12 weist einen Befestigungsabschnitt 13 zur Anordnung der Befestigungsvorrichtung 11 an der Unterkonstruktion auf, welcher mit mehreren Öffnungen 14 zum Durchführen von hier nicht dargestellten Befestigungsmitteln, wie beispielsweise (Holz-) Schrauben versehen ist. An einem Ende des Befestigungsabschnitts 13 ragt ein Verbindungsabschnitt 15 ab, der auf der dem Befestigungsabschnitt zugewandten Kontaktfläche 16 mit einer Querverzahnung 17 versehen ist. Die Querverzahnung 17 weist mehrere, parallel zueinander verlaufende Zähne 18 auf. Die Zähne 18 der Querverzahnung 17 sind im Querschnitt jeweils asymmetrisch ausgebildet.

An der Seite des Befestigungsabschnitts 13, von welcher der Verbindungsabschnitt 15 abragt, ist beabstandet zu dem Verbindungsabschnitt 15 eine Hintergreifnut 25 vorgesehen. Die Hintergreifnut 25 weist eine Einführöffnung 27 begrenzende Ränder 26 auf. An dieser Hintergreifnut 25 wird das Verbindungsmittel 61 zum Verbinden des Hakenteils 32 mit dem Fussteil 12 festgelegt bzw. verankert.

Das Hakenteil 32 weist mehrere abgebogene Abschnitte auf, so dass die an der Befestigungsvorrichtung 11 befestigte Baueinheit beispielsweise über der Dacheindeckung zu liegen kommt. Für die Halterung der Baueinheit an der Befestigungsvorrichtung 11 ist ein Halterungsabschnitt 33 vorgesehen. An einem Ende des Halterungsabschnitts 33 schliesst ein in einem Winkel zum Halterungsabschnitt 33 abgebogener, erster Distanzabschnitt 34 an. Am anderen, freien Ende 46 des Halterungsabschnitts 33 ist eine Gleiteinrichtung 51 vorgesehen, welche nachfolgend noch im Detail beschrieben wird. An dem dem Halterungsabschnitt 33 abgewandten Ende des ersten Distanzabschnitts 34 schliesst sich ein in einem Winkel zum ersten Distanzabschnitt 34 abgebogener, zweiter Distanzabschnitt 35 an. Der zweite Distanzabschnitt 35 und der Halterungsabschnitt 33 sind bis auf eine kleine Winkeldifferenz in etwa gleich ausgerichtet. An dem dem ersten Distanzabschnitt 34 abgewandten Ende des zweiten Distanzabschnitts 35 schliesst sich ein in einem nahezu rechten Winkel zum zweiten Distanzabschnitt 35 abgebogener Anlageabschnitt 36 an. Die Ausrichtung des Anlageabschnitts 36 ist derart, dass dessen freies Ende 42 dem Halterungsabschnitt 33 abgewandt ist.

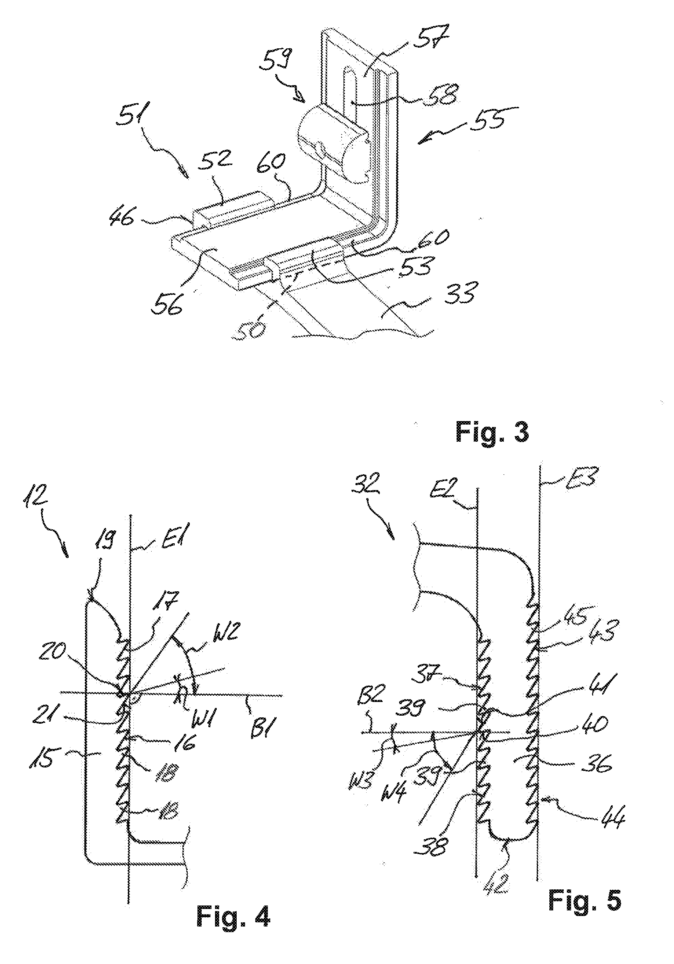

Die dem ersten Distanzabschnitt 34 zugewandte Kontaktfläche 37 des Anlageabschnitts 36 ist - wie in Fig. 5 zu sehen - mit einer Querverzahnung 38 versehen. Die Querverzahnung 38 weist ebenfalls mehrere, vorteilhaft parallel zueinander verlaufende Zähne 39 auf. Die Zähne 39 der Querverzahnung 38 sind im Querschnitt jeweils asymmetrisch ausgebildet.

Im zusammengesetzten Zustand der Befestigungsvorrichtung 11, wie er in den Figuren 1 und 2 dargestellt ist, sind die Querverzahnung 17 und die Querverzahnung 38 miteinander im Eingriff. Die Querverzahnungen 17 und 38 sind komplementär zueinander ausgebildet.

Der Halterungsabschnitt 33 des Hakenteils 32 weist eine Längserstreckung L auf. Sämtliche Querverzahnungen, wie die Querverzahnungen 17 und 38, weisen jeweils quer zu dieser Längserstreckung L verlaufende Zähne, z. B. Zähne 18 und 39, auf. Bei den anderen Teilen der Befestigungsvorrichtung 11 als das Hakenteil 32 ist die Ausrichtung jeweils auf den zusammengebauten Zustand der Befestigungsvorrichtung 11 bezogen.

Wie aus der Figur 4 ersichtlich, sind die Zähne 18 der Querverzahnung 17 gegenüber einer Bezugsgeraden B1, welche senkrecht zu einer von dem Verbindungsabschnitt 15 aufgespannten Ebene E1 ausgerichtet ist, in einem Neigungswinkel geneigt. Die dem freien Ende 19 des Verbindungsabschnitts 15 zugewandte erste Zahnflanke 20 eines Zahns 18 der Querverzahnung 17 der Kontaktfläche 16 des Fussteils 12 weist eine kürzere Erstreckung als die dem freien Ende 19 des Verbindungsabschnitts 15 abgewandte zweite Zahnflanke 21 desselben Zahns 18 auf. Die erste Zahnflanke 20 des Zahns 18 schliesst mit der Bezugsgeraden B1 einen spitzen Neigungswinkel W1 ein, der im Bereich von 0.1 ° bis 25° und vorzugsweise 10° bis 15° liegt. Die zweite Zahnflanke 21 desselben Zahns 18 schliesst mit der Bezugsgeraden B1 einen spitzen Neigungswinkel W2 ein, der im Bereich von etwa 40° bis 65° und vorzugsweise von etwa 50° bis 60° liegt.

Wie aus der Figur 5 ersichtlich, sind die Zähne 39 der Querverzahnung 38 gegenüber einer Bezugsgeraden B2, welche senkrecht zu einer von dem Anlageabschnitt 36 des Hakenteils 32 aufgespannten Ebene E2 ausgerichtet ist, in einem Neigungswinkel geneigt. Die dem freien Ende 42 des Anlageabschnitts 36 zugewandte erste Zahnflanke 40 eines Zahns 39 der Querverzahnung 38 der Kontaktfläche 37 des Hakenteils 32 weist eine kürzere Erstreckung als die dem freien Ende 42 des Anlageabschnitts 36 abgewandte zweite Zahnflanke 41 desselben Zahns 39 auf. Die erste Zahnflanke 40 des Zahns 39 schliesst mit der Bezugsgeraden B2 einen spitzen Neigungswinkel W3 ein, der im Bereich von 0.1 ° bis 25° und vorzugsweise 10° bis 15° liegt. Die zweite Zahnflanke 41 desselben Zahns 39 schliesst mit der Bezugsgeraden B2 einen spitzen Neigungswinkel W4 ein, der im Bereich von etwa 40° bis 65° und vorzugsweise von etwa 50° bis 60° liegt.

Vorteilhaft sind die Querverzahnungen 17 und 38 exakt oder nahezu exakt komplementär zueinander ausgebildet.

An einer der Kontaktfläche 37 gegenüberliegenden Seite 43 des Anlageabschnitts 36 des Hakenteils 32 ist eine weitere Querverzahnung 44 vorgesehen. Deren Zähne 45 sind in Bezug auf eine von dem Anlageabschnitt 36 aufgespannten Ebene E3 gleich wie die Zähne 18 der Querverzahnung 17 an der Kontaktfläche 16 des Verbindungsabschnitts 15 ausgebildet.

Das Verbindungsmittel 61 umfasst eine Spannschraube 62, ein Hintergreifteil 63 und ein Fixierelement 65. Das Hintergreifteil 63 ist derart ausgebildet, dass es in die Einführöffnung 27 der Hintergreifnut 25 einführbar und zum Hintergreifen der Ränder 26 der Hintergreifnut 25 in dieser z. B. um 90° verdrehbar ist.

Das Hintergreifteil 63 weist weiter zwei Vertiefungen 64 auf, in welche im verspannten Zustand des Verbindungsmittels 61 die freien Enden der Ränder 26 der Hintergreifnut 25 eingreifen.

Das Fixierelement 65 ist im Querschnitt L-förmig ausgebildet und weist einen Auflageschenkel 66 mit einer Durchführöffnung 67 für die Spannschraube 62 sowie einen Anlageschenkel 68 mit einer Anlageseite 69 auf. Die Anlageseite 69 ist mit dem mit der der Kontaktfläche 37 gegenüberliegenden Seite 43 des Anlageabschnitts 36 des Hakenteils 32 in Anlage bringbar. Die Anlageseite 69 ist mit einer Querverzahnung 70 versehen, welche komplementär zu der Querverzahnung 44 an der der Kontaktfläche 37 gegenüberliegenden Seite 43 des Anlageabschnitts 36 des Hakenteils 32 ausgebildet ist.

Im verspannten Zustand des Verbindungsmittels 61 ist der Anlageabschnitt 36 und somit das Hakenteil 32 zwischen dem Verbindungsabschnitt 15 des Fussteils 12 und dem Fixierelement 65 eingeklemmt. Bei Belastungen auf das Hakenteil werden die auftretenden Kräfte hauptsächlich über die Querverzahnungen 17 und 38 sowie 44 und 70 aufgenommen, so dass das Verbindungsmittel 61 selbst nur geringen Belastungen ausgesetzt ist.

Wie bereits dargelegt und in Fig. 3 dargestellt, ist am freien Ende 46 des Halterungsabschnitts 33 des Hakenteils 32 eine Gleiteinrichtung 51 mit Führungsabschnitten 52 und 53 vorgesehen, welche jeweils in eine Richtung quer zur Längserstreckung L des Halterungsabschnitts 33 ausgerichtet sind. Die Führungsabschnitte 52 und 53 weisen im Querschnitt jeweils eine hakenförmige Ausgestaltung auf, wobei deren freie Enden einander zugewandt sind. Weiter umfasst die Gleiteinrichtung 51 ein an der Baueinheit anordenbares, L-förmiges Halteelement 55, das in der von den Führungsabschnitten 52 und 53 geschaffenen Aufnahme in eine Richtung quer zur Längserstreckung L des Halterungsabschnitts 33 geführt ist (siehe Figur 3).

Das Halteelement 55 weist einen ersten, von den Führungsabschnitten 52 und 53 führbaren Schenkel 56 und einen von dem ersten Schenkel 56 abragenden, zweiten Schenkel 57 auf. Für eine bessere Führung des Halteelementes 55 sind dessen von den Führungsabschnitten 52 und 53 umfassten Ränder 60 jeweils mit einer entsprechend ausgebildeten Vertiefung versehen. Der zweite Schenkel 57 ist mit einem Verstelllängsschlitz 58 versehen, in dem eine Befestigungseinrichtung 59 zur Befestigung der Baueinheit angeordnet ist.

Zwischen dem Halteelement 55 und dem von den Führungsabschnitten 52 und 53 begrenzten Abschnitt des Halterungsabschnitts 33 des Hakenteils 32 ist ein Gleitelement 50 (hier gestrichelt dargestellt) vorgesehen, welches ein einfaches Gleiten des Halteelementes 55 zum Hakenteil 32 sicherstellt.

Eine Gleiteinrichtung 51 kann auch an einer einteiligen Befestigungsvorrichtung vorgesehen werden, bei der das Hakenteil und das Fussteil aus einem Element gebildet sind.

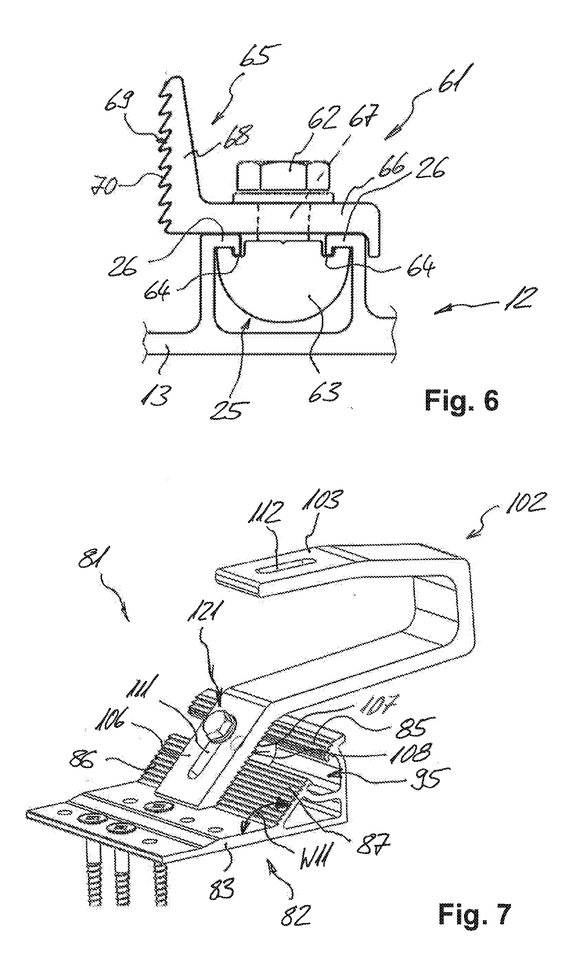

Die in der Figur 7 dargestellte Ausführungsform einer Befestigungsvorrichtung 81 umfasst ein Fussteil 82 und ein Hakenteil 102, welche über ein Verbindungsmittel 121 miteinander verbindbar sind. Das Fussteil 82 weist einen Verbindungsabschnitt 85 auf, der mit dem Befestigungsabschnitt 83 des Fussteils 82 einen stumpfen Winkel W11 einschliesst. Eine Hintergreifnut 95 ist im schräg verlaufenden Verbindungsabschnitt 85 vorgesehen.

Das Hakenteil 102 weist einen entsprechend ausgebildeten Anlageabschnitt 106 auf, der mit einem Verstelllängsschlitz 111 versehen ist, durch welchen das Verbindungsmittel 121 geführt ist. Der Halterungsabschnitt 103 des Hakenteils weist einen in Richtung der Längserstreckung des Halterungsabschnitts 103 verlaufenden Verstelllängsschlitz 112 auf, der eine justierbare Befestigung der Baueinheit an der Befestigungsvorrichtung 81 mit einer geeigneten, hier nicht dargestellten Befestigungseinrichtung ermöglicht.

Die Kontaktfläche 86 des Verbindungsabschnitts 85 ist mit einer Querverzahnung 87 versehen, welche mit der Querverzahnung 16 an der Kontaktfläche 17 an dem Verbindungsabschnitt 15 des Fussteils 12 der Befestigungsvorrichtung 11 aus der Fig. 4 vergleichbar ist. Die Kontaktfläche 107 des Anlageabschnitts 106 ist mit einer Querverzahnung 108 versehen, welche mit der Querverzahnung 38 an der Kontaktfläche 37 an dem Anlageabschnitt 36 des Hakenteils 32 der Befestigungsvorrichtung 11 aus der Fig. 5 vergleichbar ist. Ansonsten gelten auch bei dieser Ausführungsform die entsprechenden Ausführungen, wie sie im Zusammenhang mit der Befestigungsvorrichtung 11 erfolgten.

### Bezugszeichenliste

- 11: Befestigungsvorrichtung
- 12: Fussteil
- 13: Befestigungsabschnitt
- 14: Öffnung
- 15: Verbindungsabschnitt
- 16: Kontaktfläche von 15
- 17: Querverzahnung
- 18: Zahn von 17
- 19: freies Ende von 15
- 20: erste Zahnflanke
- 21: zweite Zahnflanke
- 25: Hintergreifnut
- 26: Rand von 25
- 27: Einführöffnung von 25
- 32: Hakenteil
- 33: Halterungsabschnitt
- 34: erster Distanzabschnitt
- 35: zweiter Distanzabschnitt
- 36: Anlageabschnitt
- 37: Kontaktfläche von 36
- 38: Querverzahnung
- 39: Zahn von 38
- 40: erste Zahnflanke
- 41: zweite Zahnflanke
- 42: freies Ende von 36
- 43: Seite, gegenüber von 37
- 44: Querverzahnung
- 45: Zahn von 44
- 46: freies Ende von 33

- 50: Gleitelement
- 51: Gleiteinrichtung
- 52: Führungsabschnitt
- 53: Führungsabschnitt
- 55: Halteelement
- 56: erster Schenkel
- 57: zweiter Schenkel
- 58: Verstelllängsschlitz in 57
- 59: Befestigungseinrichtung
- 60: Rand von 56
- 61: Verbindungsmittel
- 62: Spannschraube
- 63: Hintergreifteil
- 64: Vertiefung
- 65: Fixierelement
- 66: Auflageschenkel
- 67: Durchführöffnung für 62
- 68: Anlageschenkel
- 69: Anlageseite
- 70: Querverzahnung
- E(x): Ebene
- B(x): Bezugsgerade
- W(x): Winkel
- L: Längserstreckung von 33

- 81: Befestigungsvorrichtung
- 82: Fussteil
- 83: Befestigungsabschnitt
- 85: Verbindungsabschnitt
- 86: Kontaktfläche von 15
- 87: Querverzahnung
- 95: Hintergreifnut

- 102: Hakenteil
- 103: Halterungsabschnitt
- 106: Anlageabschnitt
- 107: Kontaktfläche von 36
- 108: Querverzahnung
- 111: Verstelllängsschlitz in 106
- 112: Verstelllängsschlitz in 103
- 121: Verbindungsmittel

## Patentansprüche

1. Befestigungsvorrichtung (11; 81) für die Halterung einer Baueinheit, insbesondere eines Sonnenkollektors, an einer Unterkonstruktion, insbesondere an einer Dachunterkonstruktion, mit einem Fussteil (12; 82), das einen Befestigungsabschnitt (13; 83) zur Anordnung der Befestigungsvorrichtung (11; 81) an der Unterkonstruktion aufweist, mit einem Hakenteil (32; 102), das einen Halterungsabschnitt (33; 103) für die Halterung der Baueinheit an der Befestigungsvorrichtung (11; 81) aufweist, und mit einem Verbindungsmittel (61; 121) zum Verbinden des Hakenteils (32; 102) mit dem Fussteil (12; 82), wobei an der Kontaktfläche (16; 86) des Fussteils (12; 82) sowie an der Kontaktfläche (37; 107) des Hakenteils (32; 102), welche im zusammengesetzten Zustand der Befestigungsvorrichtung (11; 81) miteinander in Anlage kommen, zumindest bereichsweise eine Querverzahnung (17, 38; 87, 108) mit jeweils mehreren Zähnen (18, 39) vorgesehen ist, **dadurch gekennzeichnet, dass** die Zähne (18, 39) zumindest einer der Querverzahnungen (17, 38; 87, 108) im Querschnitt jeweils asymmetrisch ausgebildet sind.

2. Befestigungsvorrichtung nach Anspruch 1, **dadurch gekennzeichnet, dass** die Querverzahnungen (17, 38; 87, 108) der Kontaktflächen (16, 37; 86, 107) komplementär zueinander ausgebildet sind.

3. Befestigungsvorrichtung nach Anspruch 1 oder 2, **dadurch gekennzeichnet, dass** das Fussteil (12; 82) einen von dem Befestigungsabschnitt (13; 83) abragenden Verbindungsabschnitt (15; 85) und das Hakenteil (32; 102) einen Anlageabschnitt (36; 106) aufweist, wobei die Kontaktfläche (16; 86) des Fussteils (12; 82) an dem Verbindungsabschnitt (15; 85) und die Kontaktfläche (37; 107) des Hakenteils (32; 102) an dem Anlageabschnitt (36; 106) vorgesehen sind.

4. Befestigungsvorrichtung nach einem der Ansprüche 1 bis 3, **dadurch gekennzeichnet, dass** die Zähne (18, 39) der Querverzahnung (17, 38; 87, 108) gegenüber einer Bezugsgeraden (B), welche senkrecht zu einer von dem Verbindungsabschnitt (15; 85) oder dem Anlageabschnitt (36; 106) aufgespannten Ebene (E) ausgerichtet ist, in einem Neigungswinkel (W) geneigt sind.

5. Befestigungsvorrichtung nach Anspruch 3 oder 4, **dadurch gekennzeichnet, dass** der Verbindungsabschnitt (15) ein freies Ende (19) aufweist und die dem freien Ende (19) des Verbindungsabschnitts (15) zugewandte erste Zahnflanke (20) eines Zahns (18) der Querverzahnung (17) der Kontaktfläche (16) des Fussteils (12) eine kürzere Erstreckung als die dem freien Ende (19) des Verbindungsabschnitts (15) abgewandte zweite Zahnflanke (21) desselben Zahns (18) aufweist.

6. Befestigungsvorrichtung nach Anspruch 3 oder 4, **dadurch gekennzeichnet, dass** der Anlageabschnitt (36) ein freies Ende (42) aufweist und die dem freien Ende (42) des Anlageabschnitts (36) zugewandte erste Zahnflanke (40) eines Zahns (39) der Querverzahnung (38) der Kontaktfläche (37) des Hakenteils (32) eine kürzere Erstreckung als die dem freien Ende (42) des Anlageabschnitts (36) abgewandte zweite Zahnflanke (41) desselben Zahns (39) aufweist.

7. Befestigungsvorrichtung nach Anspruch 5 oder 6, **dadurch gekennzeichnet, dass** die erste Zahnflanke (20) eines Zahns (18) und/oder die zweite Zahnflanke (21) desselben Zahns (18) mit der Bezugsgeraden (B) jeweils einen spitzen Neigungswinkel (W) einschliessen.

8. Befestigungsvorrichtung nach Anspruch 7, **dadurch gekennzeichnet, dass** der Neigungswinkel (W) der ersten Zahnflanke (20) etwa 0.1 °bis 25°, vorzugsweise 10° bis 15°, beträgt.

9. Befestigungsvorrichtung nach Anspruch 7 oder 8, **dadurch gekennzeichnet, dass** der Neigungswinkel (W) der zweiten Zahnflanke (21) etwa 40° bis 65°, vorzugsweise 50 °bis 60°, beträgt.

10. Befestigungsvorrichtung nach einem der Ansprüche 3 bis 9, **dadurch gekennzeichnet, dass** an einer der Kontaktfläche (37) gegenüberliegenden Seite (43) des Anlageabschnitts (36) eine weitere Querverzahnung (44) vorgesehen ist, welche vorteilhaft analog der Querverzahnung (17) an der Kontaktfläche (16) des Verbindungsabschnitts (15) ausgebildet ist.

11. Befestigungsvorrichtung nach einem der Ansprüche 1 bis 10, **dadurch gekennzeichnet, dass** eine Hintergreifnut (25; 95), vorteilhaft an dem Fussteil (12; 82), vorgesehen ist und das Verbindungsmittel (61; 121) ein mit der Hintergreifnut (25; 95) verspannbares Hintergreifteil (63) umfasst.

12. Befestigungsvorrichtung nach einem der Ansprüche 1 bis 11, **dadurch gekennzeichnet, dass** das Verbindungsmittel (61) ein mit dem Anlageabschnitt (36) des Hakenteils (32) in Anlage bringbares Fixierelement (65) umfasst, das vorteilhaft an einer mit dem Hakenteil (32) in Anlage bringbaren Anlageseite (69) zumindest bereichsweise mit einer Querverzahnung (70) versehen ist.

13. Befestigungsvorrichtung nach Anspruch 12, **dadurch gekennzeichnet, dass** die Querverzahnung (70) an dem Fixierelement (65) komplementär zu der Querverzahnung (44) an der der Kontaktfläche (37) gegenüberliegenden Seite (43) des Anlageabschnitts (36) des Hakenteils (32) ausgebildet ist.

14. Befestigungsvorrichtung nach einem der Ansprüche 3 bis 13, **dadurch gekennzeichnet, dass** der Verbindungsabschnitt (85) mit dem Befestigungsabschnitt (83) einen stumpfen Winkel (W11) einschliesst.

15. Befestigungsvorrichtung nach einem der Ansprüche 1 bis 14, **dadurch gekennzeichnet, dass** eine Gleiteinrichtung (51) mit Führungsabschnitten (52, 53) an dem Halterungsabschnitt (33) vorgesehen ist, wobei die Führungsabschnitte (52, 53) in eine Richtung quer zur Längserstreckung (L) des Halterungsabschnitts (33) ausgerichtet sind.
